Europäisches Patentamt

European Patent Office

Office européen des brevets

(11) Veröffentlichungsnummer: **0 511 557 A1**

## (12) EUROPÄISCHE PATENTANMELDUNG

(21) Anmeldenummer: **92106563.7**

(22) Anmeldetag: **15.04.92**

(51) Int. Cl.5: **H01R 43/16**, B23H 9/02, C25F 3/14

(30) Priorität: **29.04.91 DE 4114002**

(43) Veröffentlichungstag der Anmeldung:
**04.11.92 Patentblatt 92/45**

(84) Benannte Vertragsstaaten:
**CH DE FR GB IT LI**

(71) Anmelder: **SIEMENS AKTIENGESELLSCHAFT**
**Wittelsbacherplatz 2**
**W-8000 München 2(DE)**

(72) Erfinder: **Heide, Wilfried**
**Seumestrasse 1**
**W-8500 Nürnberg 30(DE)**

(54) **Verfahren und Vorrichtung zum Entfernen von Stanzgraten an Kontaktmessern.**

(57) Derartige Kontaktmesser werden durch Stanzen aus einem Band hergestellt und sollen zusammenhängend weiterbearbeitet, insbesondere beschichtet werden. Erfindungsgemäß erfolgt das Entgraten vor der Weiterbearbeitung elektrochemisch im Durchlauf. Dazu ist der Bearbeitungseinrichtung eine Zelle (20) vorgeschaltet, die als geschlossene Einheit zum elektrochemischen Entgraten bei einer Durchlaufbewegung des Bandes (1) ausgebildet ist.

FIG 2

EP 0 511 557 A1

Die Erfindung bezieht sich auf ein Verfahren zum Entfernen von Stanzgraten an Kontaktmessern, die durch Stanzen aus einem Band hergestellt und zusammenhängend weiterbearbeitet, insbesondere beschichtet werden. Daneben bezieht sich die Erfindung auch auf eine zugehörige Vorrichtung zur Durchführung des Verfahrens, bei der eine Einrichtung zum Bearbeiten von Werkstücken, insbesondere zum Beschichten der Kontaktmesser von durch Stanzen als zusammenhängendes Band gefertigten Steckkontakten, vorhanden ist.

Steckkontakte werden bei elektrisch betriebenen Geräten in industrieller und konsumnaher Anwendung in großer Zahl benötigt. Die Vorprodukte für derartige Steckkontakte werden als sogenannte Kontaktmesser bezeichnet und werden üblicherweise durch Stanzen aus einem Band hergestellt. Dies hat den Vorteil, daß die Kontaktmesser, die im Mittenbereich über Verbindungsstege zusammenhängen, in einfacher Weise gemeinsam fortlaufend weiterbearbeitet, insbesondere beschichtet werden können. Die Beschichtung der Kontaktmesser, die beispielsweise aus Messing bestehen, mit einem Edelmetall ist für die Kontakteigenschaften des bestimmungsgemäßen Steckkontaktes unabdingbar und wird beispielsweise galvanisch im Durchlauf aufgebracht.

Vor der Beschichtung müssen die Stanzgrate im Spitzen- bzw. Steckbereich der Kontaktmesser entfernt werden. Ansonsten führen derartige Grate zu Funktionsstörungen und Durchrieb der Edelmetallschichten im Steckbereich. Es ist bereits beim Stand der Technik versucht worden, das Entstehen von Stanzgraten beim Stanzen zu eliminieren. Hierfür müssen die Stanzwerkzeuge häufig nachgeschliffen werden, um die Grathöhe zu begrenzen, was aber kostenaufwendig ist.

Aufgabe der Erfindung ist es daher, ein Verfahren anzugeben und die zugehörige Vorrichtung zu schaffen, mit denen Stanzgrate an Kontaktmessern, die durch Stanzen aus einem Band hergestellt sind, in einfacher Weise entfernt werden können.

Die Aufgabe ist erfindungsgemäß bei einem Verfahren der eingangsgenannten Art dadurch gelöst, daß das Entgraten vor der Weiterbearbeitung elektrochemisch im Durchlauf erfolgt. Dabei wird zum elektrochemischen Entgraten das Kontaktmesser anodisch geschaltet und befindet sich in der Wirkzone von wenigstens einer von einem Elektrolyten durchflossenen Kathode.

Mit der Erfindung läßt sich das Entgraten vorzugsweise in einen vorhandenen Bearbeitungsablauf für die Stanzmesser integrieren. Insbesondere kann das Entgraten unmittelbar vor einer notwendigen Beschichtung des Werkstückes erfolgen. Voraussetzung für die Anwendung des Verfahrens ist der sogenannte Spitzeneffekt bei der elektrochemischen Bearbeitung, der bevorzugt auf Grate und scharfe Kanten wirkt. Somit werden die Grate definiert entfernt. Gleichermaßen erfolgt mit dem Verrunden der Kanten auch ein Glätten der Stanzflächen in einem einzigen Arbeitsgang.

Das elektrochemische Entgraten von metallischen Werkstücken ist zwar an sich bekannt, wozu beispielsweise auf mav 12 (1985), Seite 31 bis 35 verwiesen wird. Im einzelnen werden hierzu die Randbedingungen hinsichtlich Arbeitsweise, Elektrolyten und Elektrodenaufbau in der DE-OS 30 06 062 und in der DE-PS 34 46 629 beschrieben. Speziell das Entgraten im Durchlauf von sich bewegenden Bändern wurde aber bisher als technisch nicht durchführbar erachtet.

Bei der Vorrichtung zur Durchführung des erfindungsgemäßen Verfahrens ist der eigentlichen Bearbeitungseinrichtung eine Zelle zum elektrochemischen Entgraten vorgeschaltet, die als geschlossene Einheit bei einer Durchlaufbewegung des Werkstückes ausgebildet ist. Da das Werkstück insbesondere ein Band aus zusammenhängenden Steckkontakten ist, kann das Entgraten fortlaufend an den einzelnen Messern des Bandes erfolgen.

Als wesentliche konstruktive Merkmale einer Vorrichtung zum Entgraten im Durchlauf sind die Mittel zur Führung des Bandes einerseits und zu dessen Kontaktierung andererseits anzusehen. Zur Kontaktierung sind bei der Erfindung insbesondere elektrolytisch an die Kontaktmesser ankoppelnde Platin-Anoden vorgesehen; sie kann aber auch in herkömmlicher Weise mechanisch erfolgen.

Der Bereich der Wirkzone für das elektrochemische Entgraten wird vorteilhafterweise von zwei Halbkathoden gebildet, die einen strömungskanal für den Elektrolyten begrenzen und an ihrem vorderen Ende als Gegenform zum Kontaktmesser ausgebildet sind. Zwischen Gegenform und der Spitze des Kontaktmessers besteht ein Freiraum für den flüssigen Elektrolyten, so daß eine elektroche- mische Wirkzone definiert ist.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen.

Es zeigen

FIG 1     die Draufsicht auf ein Band mit Kontaktmessern als Halbzeug zur Herstellung von Steckkontakten,

FIG 2     eine Anlage zum elektrochemischen Entgraten im Durchlauf im Schnitt,

FIG 3 und 4     jeweils Ausschnitte aus FIG 2, welche die Bandführung einerseits und die Entgratzone andererseits verdeutlichen und

FIG 5     in vergrößerter Darstellung die elektrochemische Wirkzone.

Die einzelnen Figuren sind nicht streng maßstäblich zueinander dargestellt. Sie werden teilweise zusammen beschrieben.

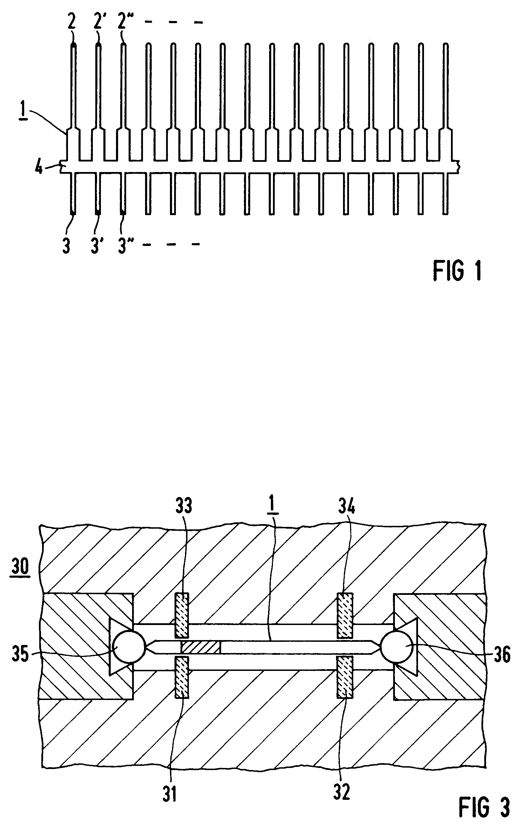

In FIG 1 bedeutet 1 ein Band aus gestanzten Rohmessern, 2, 2',... bzw. 3, 3',... zur bestimmungsgemäßen Verwendung als Steckverbindungen bei elektrischen Geräten oder dergleichen. Derartige Kontaktmesser werden üblicherweise aus einem bandförmigen Blech herausgestanzt, wobei die einzelnen Kontaktmesser 2, 2',... bzw. 3, 3',... nur durch einen schmalen Mittelsteg 4 als Anbindung verbunden sind. Nach dem Ausstanzen der Kontaktmesser 2, 2',... bzw. 3, 3',... erfolgt eine Oberflächenveredelung der Steck-bzw. Kontaktflächen, wofür beispielsweise eine Durchlaufgalvanisieranlage verwendet wird. Hierzu werden die Kontaktmesser 2, 2',... bzw. 3, 3',... entfettet, elektropoliert, vernickelt und im Steckbereich partiell mit Paladium und/oder Gold beschichtet. Anschließend erfolgt das Vereinzeln der Kontaktmesser vom Band und das Einbringen in die Steckergehäuse.

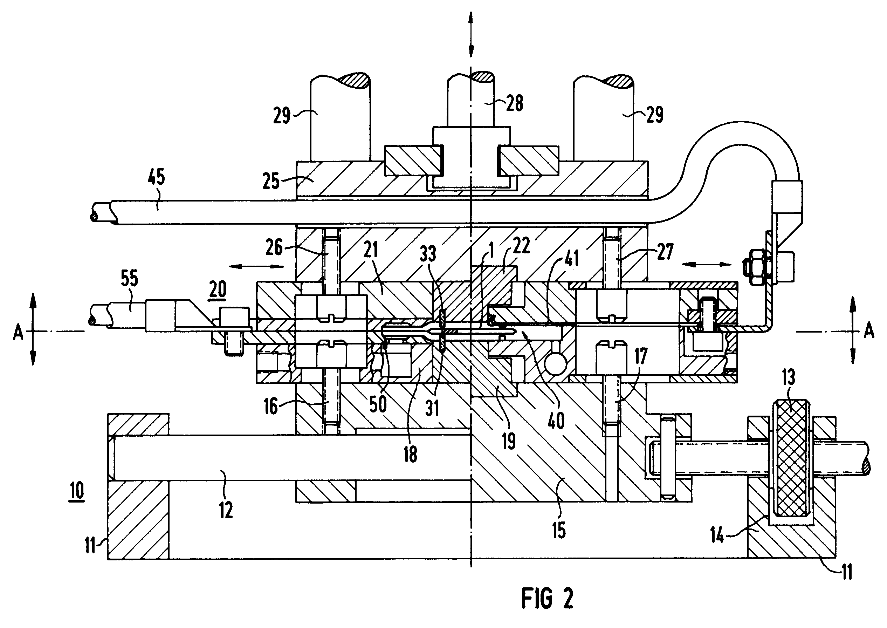

Bei der Fertigung der Kontaktmesser entstehen allerdings durch das Stanzen Grate. Der Verschleiß der Schnittwerkzeuge bedingt außerdem eine stetige Verminderung der Stanzqualität im Band 1. Derartige Fehler lassen sich durch Elektropolieren in einer Durchlaufgalvanisieranlage zur Beschichtung nur begrenzt beseitigen. Es wurde daher als notwendig erkannt, die Stanzgrate in einem separaten Verfahrensschritt vor der Beschichtung zu entfernen. Letzteres erfolgt in vorteilhafter Weise in einer Entgratzelle gemäß FIG 2.

In FIG 2, die die Entgratzelle in zwei versetzten Halbschnitten zeigt, ist der konstruktive Bereich mit 10 und der Arbeitsbereich mit 20 gekennzeichnet. Beide Bereiche sind entlang einer Vorrichtungstrennebene I miteinander verbunden und entlang dieser Ebene zum Einrichten der Werkzeuge, wie Elektroden oder dergl. trennbar. Mit 11 sind Stativfüße gekennzeichnet, in denen eine Horizontalschiene 12 zwecks Querjustierung der gesamten Zelle geführt ist. Auf die Horizontalschiene 12 ist ein Massivteil 15 als Werkstückauflage befestigt, welches die mechanischen Hilfsmittel für die Bandführung einerseits und die Kontaktierung und die zugehörigen Arbeitselektroden andererseits trägt. Untere und obere Anschlagleisten 17, 18 bzw. 21, 22 geben eine Lage für eine Kathodenordnung einerseits und eine anodische Kontaktierung Platin-Kontaktierung andererseits vor. Die Breite der Anschlagleisten 17, 18 bzw. 21, 22 ist abhängig von der Breite der jeweils zu bearbeitenden Messer 2, 2',... bzw. 2, 3'. Über ein System von Schrauben 16, 17 in Langlochbohrungen läßt sich jeweils für eine bestimmte Werkstückanordnung und entsprechende Elektrodenkombinationen die erforderliche räumliche Zuordnung auffinden und fixieren.

Im oberen Bereich der Fertigungszelle 20 ist eine Halterung 25 vorhanden, die über Schrauben 26 und 27 entsprechend spiegelbildlich der unteren Werkstückauflage 15 zugeordnet ist. Die Halterung 25 trägt weiterhin eine Kolbenstange 28 und zwei Abstützungen 29 für einen (nicht dargestellten) Arbeitszylinder. Letzterer dient zum Abheben des Oberteils, damit die Verbindungsstellen der als Endlosband zusammengeschweißten Teilbänder durchlaufen können.

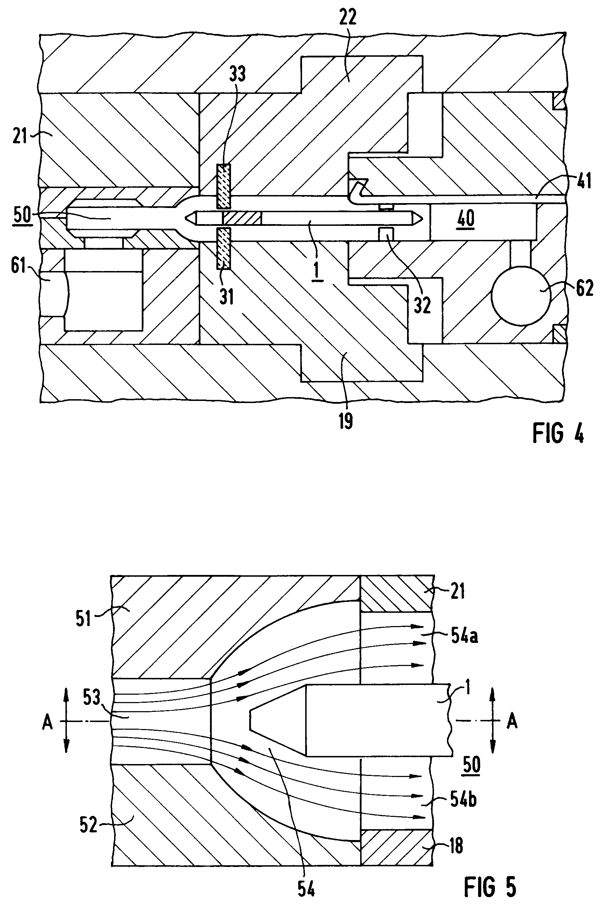

In FIG 2 ist das Band 1 mit Kontaktmessern 2, 2',... bzw. 3, 3',... im Schnitt als Werkstuck zu erkennen. Auf der einen Seite ist der Bereich der elektrochemischen Wirkzone und auf der anderen Seite der Bereich der elektrolytischen anodischen Kontaktierung darstellt, was weiter unten anhand der FIG 4 im einzelnen verdeutlicht wird. Wesentlich ist weiterhin die Bandführung 30, die jeweils in einer anderen Querschnittsebene als die elektrochemische Wirkzone liegt und im einzelnen in der FIG 3 dargestellt ist. Aus FIG 3 ergibt sich, daß zur exakten Realisierung der Bandführung in Horizontalrichtung je zwei Führungsschuhe 31, 32 und 33, 34 oberhalb und unterhalb des Kontaktmessers 2, 2',... bzw. 3, 3',... angeordnet sind. Zusätzlich können zwei Stifte 35 und 36 in der Vorrichtungstrennebene I vorhanden sein, die eine exakte Vertikalführung des Bandes 1 gewährleisten. Die Führungsschuhe 31 und 34 und die Stifte 35, 36 bestehen aus Keramik, so daß sie von den elektrochemischen Vorgängen in der Zelle 20 nicht beeinflußt werden. Sie können als Formteile entweder eingeklebt oder in Schwalbenschwanznuten gelagert sein.

Die Mittel zur elektrochemischen Bearbeitung sind im einzelnen aus FIG 4 ersichtlich. Dabei kennzeichnet 40 eine Anode aus Platin, welche den Bereich der Messer 2, 2'... bzw. 3,3',... umgreift und mittels eines Elektrolyten eine anodische Kontaktierung realisiert. Mit 50 ist die Kathodenanordnung bezeichnet, die insbesondere anhand FIG 5 im einzelnen beschrieben wird.

In FIG 2 sind elektrischen Zuleitungen 45 bzw. 55 für die Elektroden 40 bzw. 50 dargestellt. Weiterhin sind Elektrolytzu- und -abführungen 61 und 62 vorhanden, in denen der Elektrolyt für das elektrochemische Entgraten durch die Vorrichtung geführt wird. Die Strömungsrichtung ist dabei vorgebbar und umkehrbar.

Die Fertigungszelle gemäß FIG 2 ist geeignet, das elektrochemische Entgraten sowohl am stehenden als auch am bewegten Werkstück durchzuführen, wozu die Elektrolytanströmung entsprechend einstellbar ist. Es ist gemäß FIG 4 eine elektrolytische anodische Kontaktierung des Werkstückes vorgesehen, wofür Platin-Anoden, welche die Kontaktmesser 2, 2',... bzw. 3, 3',... umgreifen, notwendig sind. Alternativ ist auch möglich, mechanische Kontaktierungen, wie Schleifkontakte oder dergleichen vorzusehen, die beispielsweise auf dem durchgehenden Mittelsteg des Bandes 1 mit den Kontaktmessern 2, 2',... bzw. 3, 3',... aufsitzen.

Für ein wirkungsvolles elektrochemisches Entgraten sind neben den elektrischen Randbedingungen und der Wahl des geeigneten Elektrolyten auch die geometrischen Abmessungen im Arbeitsspalt wesentlich. Hierzu verdeutlicht FIG 5, daß die Spaltbreite variierbar ist. Erkennbar sind Teilkathoden 51 und 52, die einen Durchlaßkanal 53 für den Elektrolyten umschließen und sich zu den Kontaktmessern 2,2',... bzw. 3,3',... tüllenförmig hin erweitern. Es wird so ein geometrisch in etwa konstanter Arbeitsspalt 54 sowie 54a und 54b zu den beiden Seiten der Kontaktmesser gebildet, der üblicherweise in der Größenordnung von etwa einem Millimeter liegen wird. Begrenzt werden die Teilkathoden 51 und 52 von den Ausschlagleisten 18 und 22.

Die Arbeitsbedingungen der Fertigungszelle lassen sich empirisch ermitteln. Wesentlich sind der Elektrolyt und die elektrischen Kennwerte, wie insbesondere die Stromstärke. Weiterhin können für die Arbeitsweise bei bewegtem Werkstück die Bandgeschwindigkeit selbst und die Strömungsgeschwindigkeit des Elektrolyten variiert werden.

Im allgemeinen haben sich basische Elektrolyte mit einem pH-Wert zwischen 8 und 9 als geeignet erwiesen. Speziell zum elektrolytischen Entgraten von Kontaktmessern aus Messing (CuZn2O) hat sich ein Elektrolyt auf der Basis von $NaNO_3$ in der Konzentration etwa 14 kg $NaNO_3$ auf 100 l Wasser bewährt, wobei Ströme bis zu 200 A zur Anwendung kommen. Es hat sich als vorteilhaft erwiesen, mit gepulstem Strom zu arbeiten, wodurch der Streuabtrag gemindert und die Oberflächenrauhigkeit der entgrateten Teile geringer wird. Die Stromstärke des Entgratstroms sowie dessen Pulsdauer wird im Einzelfall vom Werkstoff der Kontaktmesser abhängen.

Die beschriebene Vorrichtung ist in vielerlei Hinsicht modifizierbar. Insbesondere, wenn Kontaktmesser nur einseitig beschichtet werden sollen, genügt eine einseitige Entgratung. Für diese Option kann vorgesehen sein, den Strom für die beiden Messerseiten über getrennte Zuführungen fließen zu lassen.

Die Erfindung wurde unmittelbar als Teil einer Fertigungslinie für eine Beschichtung der entgrateten Teile beschrieben. Sie kann aber auch zum Entgraten bewegter bandförmiger Werkstücke unabhängig von einer nachfolgenden Beschichtungsanlage realisiert werden.

**Patentansprüche**

1. Verfahren zum Entfernen von Stanzgraten an Kontaktmessern, die durch Stanzen aus einem Band hergestellt und zusammenhängend weiterbearbeitet, insbesondere beschichtet werden, **dadurch gekennzeichnet,** daß das Entgraten vor der Weiterbearbeitung elektrochemisch im Durchlauf erfolgt.

2. Verfahren nach Anspruch 1, **dadurch gekennzeichnet,** daß zum elektrochemischen Entgraten das Kontaktmesser anodisch geschaltet und sich in der Wirkzone von wenigstens einer von einem Elektrolyten durchflossenen Kathode befindet.

3. Verfahren nach Anspruch 1, **dadurch gekennzeichnet,** daß beim Entgraten gleichermaßen ein Verrunden der Kanten erfolgt.

4. Verfahren nach Anspruch 1, **dadurch gekennzeichnet,** daß beim Entgraten gleichermaßen ein Glätten der Stanzflächen erfolgt.

5. Verfahren nach Anspruch 1, wobei die Weiterbearbeitung wenigstens einen Beschichtungsvorgang beinhaltet, **dadurch gekennzeichnet,** daß der sich an das Entgraten anschließende Beschichtungsvorgang galvanisch erfolgt.

6. Verfahren nach Anspruch 1, **dadurch gekennzeichnet,** daß zum elektrochemischen Entgraten ein basischer Elektrolyt mit einem pH-Wert zwischen 8 und 9 verwendet wird.

7. Verfahren nach Anspruch 6, insbesondere zum Bearbeiten von Kontaktmessern aus Messing (CuZn2O), **dadurch gekennzeichnet,** daß ein Elektrolyt auf der Basis von $NaNO_3$ /$H_2O$ verwendet wird.

8. Verfahren nach Anspruch 6, **dadurch gekennzeichnet,** daß das elektrolytische Entgraten mit gepulstem Strom erfolgt.

9. Verfahren nach Anspruch 8, **dadurch gekennzeichnet,** daß der Entgratstrom und/oder dessen Pulsverhältnis in Abhängigkeit vom Werkstoff der Kontaktmesser gewählt wird.

10. Vorrichtung zur Durchführung des Verfahrens nach Anspruch 1 oder einem der Ansprüche 2 bis 9, bei der eine Einrichtung zum Bearbeiten von Werkstücken, insbesondere zum Beschichten der Kontaktmesser von durch Stanzen als zusammenhängendes Band gefertigten Steckkontakten, vorhanden ist, **dadurch gekennzeichnet,** daß der Bearbeitungseinrichtung eine Zelle (20) vorgeschaltet ist, die als geschlossene Einheit zum elektrochemischen Entgraten bei einer Durchlaufbewegung des Werkstückes (1) ausgebildet ist.

11. Vorrichtung nach Anspruch 11, wobei das Werkstück ein Band ist, **dadurch gekennzeichnet,** daß in der Zelle (20) zum elektrochemischen Entgraten Führungen (30, 31-36) für das Band (1) mit den einzelnen Kontaktmessern (2, 2',..., 3, 3',...) vorhanden sind.

12. Vorrichtung nach Anspruch 10, **dadurch gekennzeichnet,** daß zur Kontaktierung des bewegten Bandes (1) mit den einzelnen Kontaktmessern (2, 2',..., 3, 3',...) elektrolytisch an die Kontaktmesser (2, 2',...,3, 3',...) ankoppelnde Platin-Anoden (40) vorgesehen sind.

13. Vorrichtung nach Anspruch 10, **dadurch gekennzeichnet,** daß die Zelle (20) zum elektrochemischen Entgraten zwei Halb-Kathoden (51, 52) aufweist, die einen Strömungskanal (53) für einen Elektrolyten begrenzen und an ihrem vorderen Ende als Gegenform (54) zum Kontaktmesser (2, 2',..., 3, 3',...) ausgebildet sind.

14. Vorrichtung nach Anspruch 13, **dadurch gekennzeichnet,** daß zwischen der Gegenform (54) und der Spitze der Kontaktmesser (2, 2',..., 3, 3',...) ein Freiraum für den flüssigen Elektrolyten besteht, wodurch eine elektrochemische Wirkzone definiert ist.

15. Vorrichtung nach einem der Ansprüche 10 bis 14, **dadurch gekennzeichnet,** daß sie unabhängig von der Weiterbearbeitungseinrichtung zum Entgraten bewegter bandförmiger Werkstücke verwendet wird.

FIG 1

FIG 3

FIG 2

EP 0 511 557 A1

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 820 390 (SCHUSTER) <br> * Zusammenfassung; Abbildung 8 * <br> --- | 1, 10 | H01R43/16 <br> B23H9/02 <br> C25F3/14 |
| A | PATENT ABSTRACTS OF JAPAN <br> vol. 8, no. 234 (M-334)(1671) 26. Oktober 1984 <br> & JP-A-59 115 122 ( TOSHIBA K.K. ) 3. Juli 1984 <br> * Zusammenfassung * <br> --- | 1, 10 | |
| A | WO-A-8 202 408 (BLOMSTERBERG) <br> * Seite 2, Zeile 8 - Zeile 26; Anspruch 4 * <br> --- | 1-9 | |
| A | DE-A-2 532 719 (SIEMENS AG.) <br> * Anspruch 1 * <br> ----- | 1 | |

**RECHERCHIERTE SACHGEBIETE (Int. Cl.5 )**

H01R
B23H
C25F

Der vorliegende Recherchenbericht wurde für alle Patentansprüche erstellt

| Recherchenort | Abschlußdatum der Recherche | Prüfer |
|---|---|---|
| DEN HAAG | 06 AUGUST 1992 | HORAK A. L. |